# EUROPÄISCHE PATENTSCHRIFT

(11) **EP 0 849 197 B1**
(45) Veröffentlichungstag und Bekanntmachung des Hinweises auf die Patenterteilung: **04.07.2001**
(21) Anmeldenummer: 97121521.5
(22) Anmeldetag: 06.12.1997
(51) Int. Cl.: B65G 47/14

(54) **Vorrichtung zum Vereinzeln und Transportieren von Flaschen und Formteilen**
Separating and conveying device for bottles and molded products
Dispositif de séparation et de transport de bouteilles et de pièces moulées

(30) Priorität: 20.12.1996 DE 19653090
(43) Veröffentlichungstag der Anmeldung: 24.06.1998
(73) Patentinhaber: Schindel, Hugo, 55291 Saulheim (DE)
(72) Erfinder: Schindel, Hugo, 55291 Saulheim (DE)
(74) Vertreter: Fischer, Wolf-Dieter, Dipl.-Ing.

(56) Entgegenhaltungen:
- EP-A- 0 321 378
- FR-A- 2 693 430
- US-A- 4 723 661

## Beschreibung

Die Erfindung betrifft eine Vorrichtung zum Vereinzeln und Transportieren von in einem Sammelbehälter lose geschütteten Formteilen.

Es ist eine Vorrichtung zum Aufrichten und Aufreihen von länglichen Flaschen, Dosen, Formteilen oder dergleichen, verschiedenster Form und Größe, in eine stehende Position, mit obenliegender Einfüllöffnung und anschließender Übergabe an eine Transportvorrichtung bekannt
(US-A 54 15 322), bei der sich innerhalb eines Begrenzungsgehäuses, mit hochstehendem Rand und schräggestellter Scheibe, eine entsprechend schräggestellte Drehscheibe befindet, die in ihrem Randbereich Mitnahmeeinrichtungen aufweist, die den Durchtritt der Formteile zu Fallschächten ermöglichen. Diese Mitnahmeeinrichtung besteht im wesentlichen aus tangential zum Rand verlaufenden Durchtrittöffnungen, deren Länge in etwa der Länge der Formteile entspricht und es erfolgt eine Abstützung der Formteile durch einen unterhalb der Durchtrittsöffnungen angeordneten feststehenden Boden. Beim Drehen der Scheibe kommen die Formteile in diesen Durchtrittsöffnungen zum Liegen und werden zu einem oberen Kurvenpunkt transportiert, wo sie in die Fallschächte gelangen. In die Durchtrittsöffnungen können auswechselbare Formstücke eingesetzt werden, wobei diese Formstücke ohne Boden sind und eine Funktion nur im Zusammenhang mit dem darunter befindlichen mitlaufenden Fallschacht entfalten. Diese Formstükke stellen kein selbständiges Transportmittel dar. Sie besitzen eingebaute Schikanen, die die Flaschenlage mechanisch erkennen sollen, so daß beim Herunterfallen die Mündung nach oben zeigt. Dieses Prinzip funktioniert nur mit formstabilen Flaschen und wenn der Flaschenhals eine entsprechende Auflagelänge bietet. Darüber hinaus sind diese Formstücke immer nur für eine Flaschengröße gestaltet, wobei es für die Funktionsfähigkeit dieser Vorrichtung erforderlich ist, daß die Mitnahmeeinrichtungen und die Formstücke ziemlich genau der Form und Größe der Formteile angepaßt sind, d. h., es müssen jeweils bei andersgearteten Formteilen an der Maschine entsprechende Veränderungen vorgenommen werden, d. h., es müssen die Formstücke und ggf. auch die Mitnahmeeinrichtungen ausgewechselt werden. Ein solcher hoher Formatteilaufwand ist mit hohen Kosten verbunden. Darüberhinaus ist wegen der angepaßten Form die Belegung der Aussparungen erschwert und liegt lediglich bei etwa 70 - 80 %. Ein weiterer wesentlicher Nachteil besteht in der mechanischen Beanspruchung der Formteile, die durch diese mechanische Beanspruchung sehr leicht deformiert werden können, was insbesondere beim Vereinzeln von umweltfreundlichen, dünnwandigen Flaschen der Fall ist. Weiterhin ergibt sich der Nachteil, daß nach einer solchen beschädigten bzw. deformierten Flasche, sich diese nicht oder nur sehr schwer aussortieren läßt, da dieses Formteil in der Öffnung klemmt. Durch die Mitnehmer werden die Flaschen grundsätzlich über Böden geschoben, so daß es leicht zu Verkratzungen an empfindlichen Oberflächen der Flaschen oder Formteile kommt. Besonders wichtig ist dies bei umweltfreundlichen Leichtflaschen, die schon vorher ettiketiert sind. Das Ettiket darf keine Kratzspuren zeigen. Dies führt zu Störungen oder zu einem Stillstand der Maschine. Es besteht außerdem ein erheblicher Materialaufwand durch die auf Lager zu legenden Formatteile für den Wechsel beim Einsatz für Formteile anderer Abmessungen.

Eine ähnliche bekannte Vorrichtung (EP 0 321 378 A) besitzt Transportteile, die auswechselbar angebracht sind und immer Bestandteil der rotierenden Scheibe sind. Sie sind nach unten hin offen, damit die geförderten Formen und Flaschen in die Fallschächte gelangen können.

Der Erfindung liegt die Aufgabe zugrunde, eine Vorrichtung vorzuschlagen, mit der das Vereinzeln und Transportieren von Flaschen und Formteilen verschiedenster Abmessungen und Formen ohne einen teuren und hohen Formatteilaufwand bewerkstelligt werden kann.

Diese Aufgabe wird bei einer Vorrichtung zum Vereinzeln und Transportieren von in einem Sammelbehälter lose geschütteten Formteilen durch die folgenden Merkmale gelöst:
Ein Aufnahmebehältnis aus formstabilem Material mit nach oben offenem Innenraum und mit einem Boden versehen nimmt ein Formteil liegend auf;
das Aufnahmebehältnis wird auf einem Transportband oder Gleitschienen aufliegend durch den Sammelbehälter durchgeschoben bzw. durchgezogen;
das mit einem Formteil beladene Aufnahmebehältnis gelangt mit Hilfe der Transportbänder oder Gleitschienen zu einer Verarbeitungsmaschine.

Vorteilhafte Ausgestaltungen der Erfindung ergeben sich aus den Ansprüchen 2 bis 6.

Die Erfindung bringt insbesondere den Vorteil, daß eine Vielzahl von Flaschenformen und Formteilen in einem derartigen Aufnahmebehältnis vereinzelt und transportiert werden kann, wobei der Behältnisinnenraum wesentlich größer sein kann, als die zu fördernde Flasche oder Formteil, so daß eine leichte Befüllung des Aufnahmebehältnisses möglich ist. Damit läßt sich auch ein wesentlich höherer Nutzungsgrad erreichen, und es kann somit auch die Vorrichtung wegen der hohen Belegungsmöglichkeit langsamer und damit schonender betrieben werden. Da das Aufnahmebehältnis nicht Bestandteil des Sortiersystems ist, können Flaschen oder Formteile den einzelnen Arbeitsprozessen, die linear oder rotierend arbeiten, zugeführt werden. Quetsch- bzw. und Scherstellen an den Flaschen oder Formteilen werden vermieden. Bei der Erfindung werden die Flaschen und Formteile nicht über eine stehende Fläche geschoben, so daß auch kratzempfindliche Oberflächen verarbeitet werden können.

Weiterhin ist es vorteilhaft, daß ein einfaches Austauschen der Aufnahmebehältnisse für Flaschen und Formteile mit anderen Abmessungen durchgeführt werden kann.

Auch ergibt sich der Vorteil, daß der Transport zur Weiterverarbeitungsmaschine auf beliebige Entfernungs- und Höhenunterschiede erfolgen kann und somit eine Anpassung an die Räumlichkeiten am Aufstellungsort einfacher möglich ist.

Auch lassen sich beliebige Kontroll- oder Bearbeitungsstationen einrichten, um beschädigte oder sonstwie deformierte Flaschen oder Formteile auszusortieren, wobei bei den bekannten Vorrichtungen eine solche Kontrolle von schlechten bzw. guten Flaschen nicht möglich ist.

Die Erfindung wird in der nachfolgenden Beschreibung anhand eines in den Zeichnungen dargestellten Ausführungsbeispiels näher erläutert.

Es zeigen,
- Fig. 1: eine Auführungsform des Aufnahmebehältnisses im Längsschnitt,
- Fig. 2: einen Grundriß von Figur 1,
- Fig. 3: eine weitere Ausführungsform des Aufnahmebehältnisses im Längsschnitt,
- Fig. 4: einen Grundriß von Figur 3,
- Fig. 5: eine Draufsicht auf mehrere aneinandergereihte Aufnahmebehältnisse mit einem Zahnriemenantrieb,
- Fig. 6: einen Schnitt nach der Linie B-B in Fig. 5,
- Fig. 7: eine Draufsicht auf eine Vorrichtung zum Vereinzeln und Transportieren von Flaschen oder Formteilen unter Verwendung eines derartigen Aufnahmbehältnisses,
- Fig. 8: einen Schnitt nach der Linie A-A in Figur 7,
- Fig. 9: eine Draufsicht auf eine derartige Vorrichtung gemäß einer weiteren Ausführungsform,
- Fig. 10: eine Draufsicht auf eine solche Vorrichtung gemäß einer weiteren Ausführungsform und
- Fig. 11: einen Schnitt nach der Linie C-C in Fig. 10.

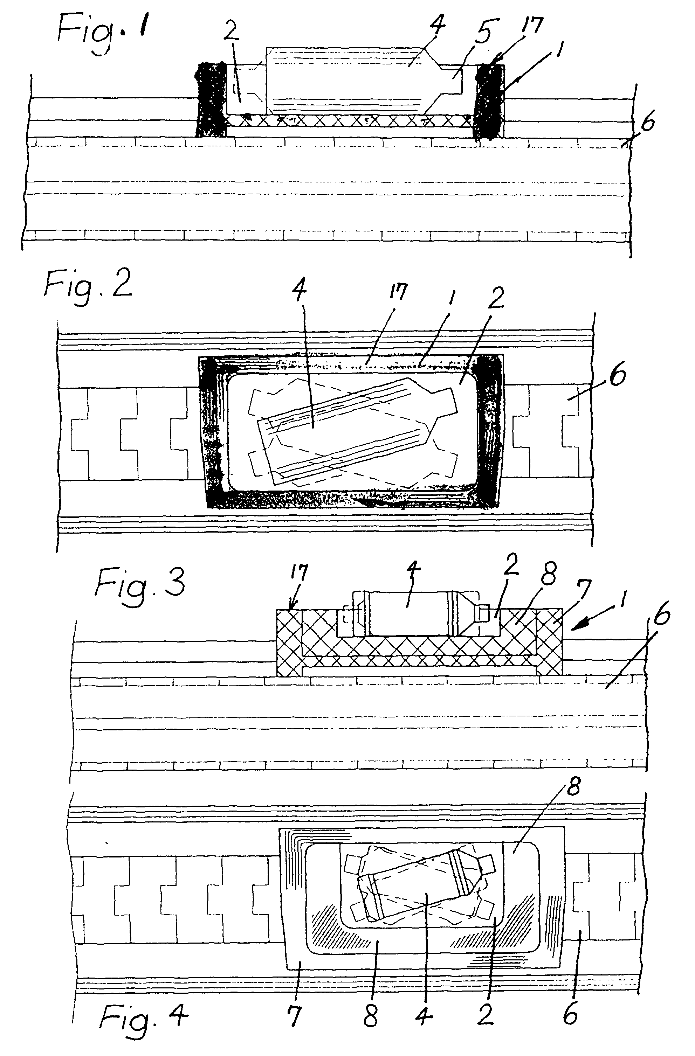

Das in den Figuren 1 und 2 dargestellte Aufnahmebehältnis 1, weist eine in etwa rechteckige Form auf, mit einem nach oben hin offenen Innenraum 2 und einem Boden 3, wobei in diesem Innenraum 2 ein Formteil 4 lose angeordnet werden kann. Das Behältnis 1 kann außen an den Ecken abgerundet oder auch oval sein. Der Innenraum 2 ist dabei so ausgelegt, daß dieses Formteil 4 lose zum Liegen kommt und die Größe des Formteiles 4 in einer derartigen Bandbreite variiren kann, daß kein zweites Formteil durch ein solches Aufnahmebehältnis 1 mittransportiert wird.

Das Aufnahmebehältnis 1 besteht aus einem formstabilen Material, beispielsweise einem entsprechenden Kunststoffmaterial, wobei der Boden 3 vorteilhaft durchsichtig ausgebildet ist. Gegebenenfalls kann der Boden 3 auch in der Höhe verstellbar sein. In dem Innenraum 2 werden die Formteile oder Flaschen 4 liegend transportiert, wobei es für den Transport bedeutungslos ist, ob die Flaschenöffnung 5 nach rechts oder links in Transportrichtung verläuft. Die Flasche 4 kann auch schräg zum Liegen kommen. Der Transport erfolgt mit Hilfe entsprechender Transportmittel, wie beispielsweise Transportbänder 6 oder auch Gleitschienen, wo die aneinander gereihten Aufnahmebehältnisse 1 mit Hilfe von Antriebsrädern oder seitlichen Riemen, Zahnriemen oder Ketten weitergeschoben werden. Hierbei kann ein solches Transportband 6 beliebig den räumlichen Verhältnissen angepaßt geführt werden.

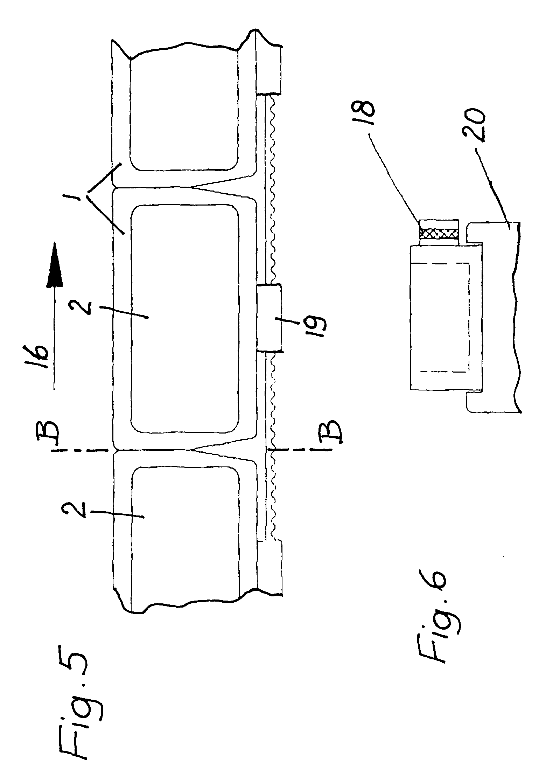

Gemäß der in den Figuren 3 und 4 gezeigten Ausführungsform weist das Aufnahmebehältnis 1 ein Grundbehältnis 7 auf, das einen Innenraum entsprechend einem größten Formteil besitzt, wobei dann zum Reduzieren des Innenraums Reduzierstücke 8 eingesetzt werden können.

Bei der in den Fig. 5 und 6 gezeigten Ausführungsform werden die einzelnen Aufnahmebehältnisse 1 mit Hilfe eines Zahnriemens 18 transportiert, an den sie mit Hilfe einer Klemmeinrichtung 19 befestigbar sind. Die Behältnisse 1 laufen dabei auf einer Gleitschiene 20, die für einen geräuscharmen Betrieb ausgelegt sein muß. Durch den Zahnriemenantrieb ergibt sich ein teilungsgenauer Transport der Aufnahmebehältnisse 1.

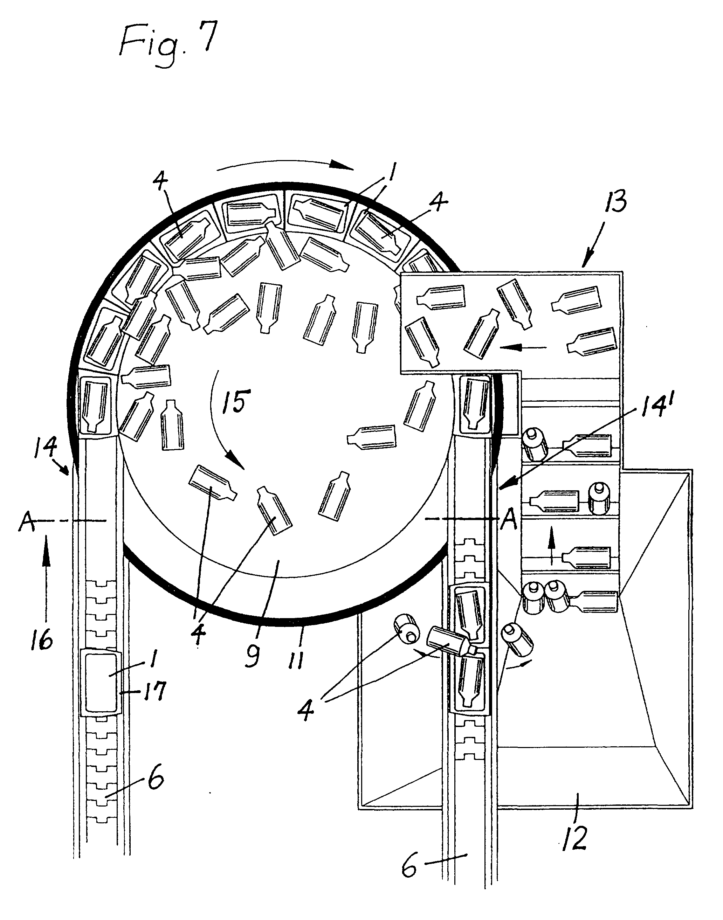

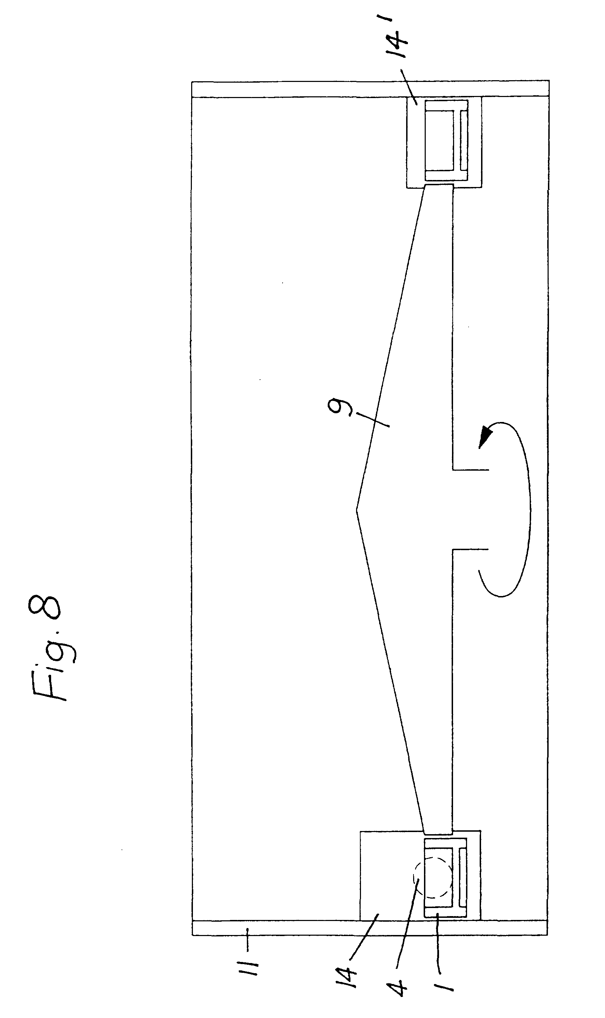

Die Figuren 7 und 8 zeigen eine Vorrichtung zum Beladen der Aufnahmebehältnisse 1 mit Flaschen oder Formteilen 4, wobei das Transportband 6 auf eine Verteilerscheibe 9 mündet, die sich auf den gleichen Niveau befindet, wie auch der obere Rand des Aufnahmebehältnisses 1. Um diese Verteilerscheibe 9 ist ein hochstehender Rand 11 angebracht, so daß die Formteile 4 innerhalb des Bereichs der Verteilerscheibe 9 festgehalten sind. Zum Einbringen dieser Formteile 4 in dieses Behältnis 9,11, dient eine beispielsweise seitlich angeordnete Zuführvorrichtung 13 mit einem Einfülltrichter 12. Der Rand 11 zur Verteilerscheibe 9 ist an den Stellen unterbrochen und mit Durchtritten 14, 14' versehen, wo die Transportbänder 6 tangential an den Rand der Verteilerscheibe 9 zugeführt bzw. abgeführt sind.

Die Verteilerscheibe 9 kann verschieden ausgebildet sein und zwar kann es sich hierbei um eine flache, waagerecht angeordnete, sich drehende Scheibe mit einer Drehrichtung 15 entgegengesetzt der Laufrichtung 16 des Förderbandes 6 handeln oder die Scheibe 9 kann auch geringförmig kegelig ausgebildet sein, so daß die Formteile 4 durch die Schräge zum Rand gelangen. Grundsätzlich befindet sich das Niveau der Scheibe 9 in ihrem Randbereich in Höhe des oberen Randes 17 der Aufnahmebehältnisse 1. Die Scheibe 9 kann aber auch nichtdrehend ausgebildet sein, wobei dann eine entsprechende kegelförmige Ausbildung notwendig ist, damit die Formteile 4 zum Rand der Scheibe 9 und damit in den Bereich Aufnahmebehältnisse 1 gelangen. In diesem Fall ist es notwendig, das Transportmittel 6 entsprechend dem kreisförmigen Verlauf der Scheibe 9 am Rand bis zum Austritt weiterzuführen.

Unmittelbar nach der Austrittsöffnung 14' des Transportmittels 6 werden die nicht ordnungsgemäß abgelegten Formteile 4 mit Hilfe einer Auswurfeinrichtung, beispielsweise einer bekannten Blaseinrichtung entfernt und gelangen erneut in den Trichter 12 der Zuführvorrichtung 13.

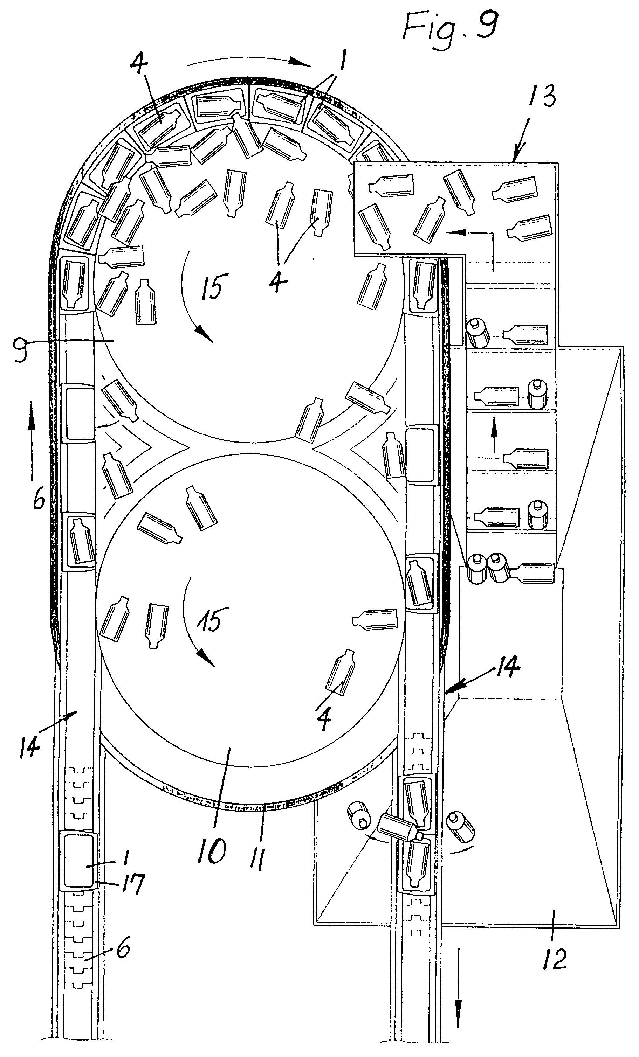

Wie die Figur 9 zeigt, können mehrere solcher Verteilerscheiben 9,10, die, wenn drehbar ausgebildet, sich gleichsinnig drehen, wodurch die Kapazität der Vorrichtung verbessert werden kann. Diese Verteilerscheiben 9,10 können auch nicht drehbar und kegelförmig gebaut sein.

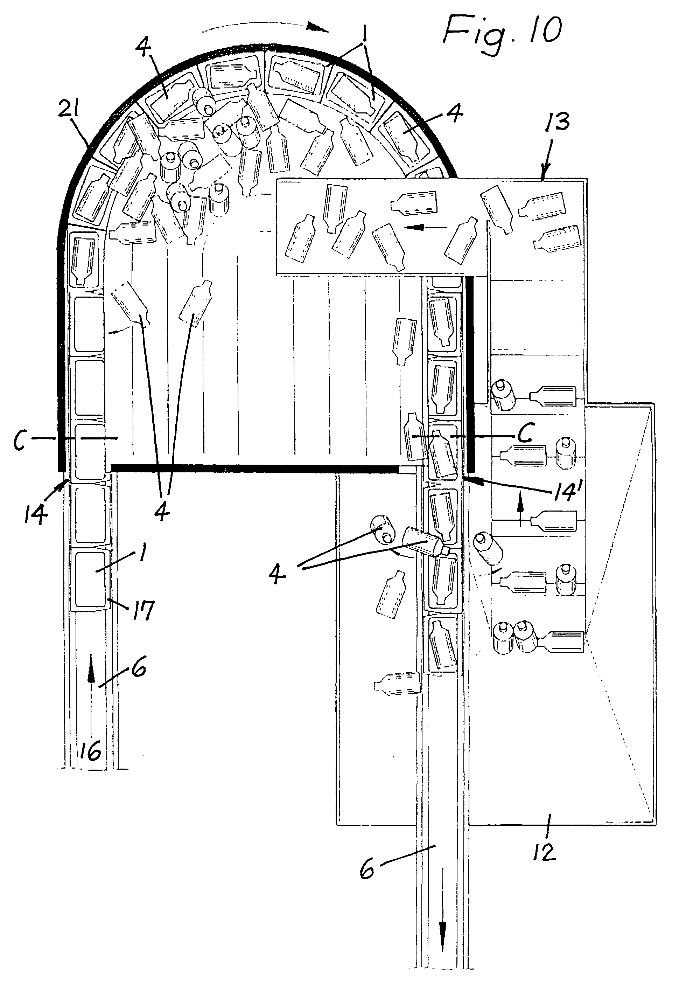

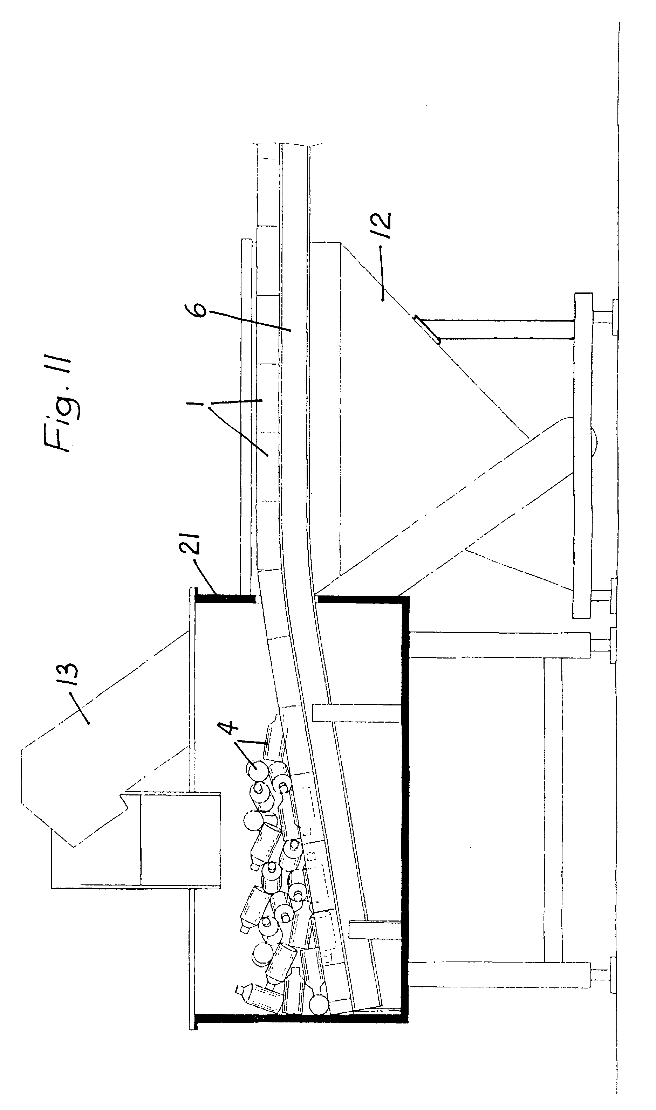

Bei der in den Fig. 10 und 11 gezeigten Ausführungsform sind die einzelnen Formteile bzw. Flaschen 4 in einem Behälter 21 lose geschüttet und das Transportmittel, z.B. das Transportband 6 wird an den Durchtritten 14 bzw. 14' durch diesen Behälter 21 hindurchgeführt. Damit werden aber auch die einzelnen Aufnahmebehältnisse 1 durch diesen Behälter 21 geführt und mit den Formteilen bzw. Flaschen 4 beladen. Der Behälter 21 ist an seiner Rückwand 22 halbkreisförmig ausgebildet, so daß eine gute Rückführung des Transportmittels 6 gewährleistet ist. Diese Ausführungsform eignet sich insbesondere für eine preiswerte Gestaltung der Einrichtung.

### Bezugszeichenliste

- 1: Aufnahmebehältnis
- 2: Innenraum
- 3: Boden
- 4: Formteil, Flasche
- 5: Flaschenöffnung
- 6: Transportbänder
- 7: Grundbehältnis
- 8: Reduzierstück
- 9: Verteilerscheibe
- 10: Verteilerscheibe
- 11: hochstehender Rand
- 12: Einfülltrichter
- 13: Zuführvorrichtung
- 14, 14': Durchtritt
- 15: Drehrichtung
- 16: Laufrichtung
- 17: oberer Rand des Behältnisses
- 18: Zahnriemen
- 19: Klemmeinrichtung
- 20: Gleitschiene
- 21: Behälter
- 22: Rückwand

## Patentansprüche

1. a. Vorrichtung zum Vereinzeln und Transportieren von in einem Sammelbehälter (11, 9; 11, 10; 21) lose geschütteten Formteilen (4), wobei
b. ein Aufnahmebehältnis (1) aus formstabilem Material, das mit nach oben offenem Innenraum (2) und mit einem Boden (3) versehen ist, ein Formteil (4) liegend aufnimmt, wobei
c. das Aufnahmebehältnis (1) auf einem Transportband (6) oder Gleitschienen (20) aufliegend durch den Sammelbehälter (11, 9; 11, 10; 21) durchgeschoben bzw. durchgezogen wird, und wobei
d. das mit einem Formteil (4) beladene Aufnahmebehältnis (1) mit Hilfe der Transportbänder (6) oder Gleitschienen (20) zu einer Verarbeitungsmaschine gelangt.

2. Vorrichtung nach Anspruch 1, dadurch gekennzeichnet, daß das Aufnahmebehältnis (1) als Innenraum (2) eine rechteckige oder muldenartige Vertiefung aufweist.

3. Vorrichtung nach Anspruch 1 und 2, dadurch gekennzeichnet, daß der Boden (3) des Aufnahmebehältnisses (1) durchsichtig ist.

4. Vorrichtung nach Anspruch 1 bis 3, dadurch gekennzeichnet, daß der Boden (3) des Aufnahmebehältnisses (1) in der Höhe verstellbar ist.

5. Vorrichtung nach Anspruch 1 bis 4, dadurch gekennzeichnet, daß das Aufnahmebehältnis (1) ein der größten Form entsprechendes Grundbehältnis (7) aufweist, in das zum Verkleinern des Innenraumes (2) Reduzierstücke (8) einsetzbar sind.

6. Vorrichtung nach einem der Ansprüche 1 bis 5, dadurch gekennzeichnet, daß die Transportbänder (6) oder Gleitschienen (20) mit den geschobenen Aufnahmebehältnissen (1) an eine oder mehrere die Formteile (4) aufnehmende Verteilerscheiben (9, 10) oder lineare Transportbänder heran- oder vorbeigeführt sind.

## Claims

1. a. A device for separating and transferring machined/moulded parts (4) placed loosely in a container (11, 9; 11,10; 21), in which
b. a receptacle (1) formed of a rigid material having a space (2) open to the top and being provided with a bottom (3), receiving a machined/moulded part (4) resting in a horizontal position, whereby
c. the receptacle (1) is pushed or pulled through the container (11, 9; 11,10; 21) while resting on a conveyor belt (6) or skid rails (20), and
d. the receptacle (1) loaded with the machined/moulded parts (4) reaches a processing station by means of the conveyor belts (6) or skid rails (2).

2. A device according to Claim 1, characterised in that the space (2) of the receptacle (1) is a rectangular or moulded depression.

3. A device according to Claims 1 and 2, characterised in that the bottom (3) of the receptacle (1) is transparent.

4. A device according to Claims 1 to 3, characterised in that the bottom (3) of the receptacle (1) is adjustable in height.

5. A device in accordance with Claims 1 to 4, characterised in that the receptacle (1) has a base body (7) corresponding to the largest shape into which reduction pieces (8) can be inserted to reduce the space (2).

6. A device according to one of the Claims 1 to 5, characterised in that the conveyor belts (6) or skid rails (2) with the receptacles (1) pushed on them extend to or past one or more distribution discs (9, 10) which take the machined/moulded parts (4).

## Revendications

1. a. Dispositif de séparation et de transport de pièces façonnées (4) jetées en vrac dans un récipient collecteur (11, 9 ; 11, 10 ; 21), dans lequel
b. un récipient récepteur (1) en matière indéformable qui est pourvu d'un espace intérieur (2) ouvert vers le haut et d'un fond (3) reçoit couchée une pièce façonnée (4),
c. le récipient récepteur (1), reposant sur une bande transporteuse (6) ou des glissières (20), est poussé ou tiré à travers le récipient collecteur (11, 9 ; 11, 10 ; 21), et
d. le récipient récepteur (1) chargé d'une pièce façonnée (4) parvient à une machine de traitement à l'aide des bandes transporteuses (6) ou des glissières (20).

2. Dispositif selon la revendication 1, caractérisé par le fait que le récipient récepteur (1) présente comme espace intérieur (2) un creux rectangulaire ou du genre auge.

3. Dispositif selon les revendications 1 et 2, caractérisé par le fait que le fond (3) du récipient récepteur (1) est transparent.

4. Dispositif selon les revendications 1 à 3, caractérisé par le fait que le fond (3) du récipient récepteur (1) est réglable en hauteur.

5. Dispositif selon les revendications 1 à 4, caractérisé par le fait que le récipient récepteur (1) présente un récipient de base (7) correspondant à la plus grande forme, dans lequel des pièces de réduction (8) peuvent être mises en place pour rapetisser l'espace intérieur (2).

6. Dispositif selon l'une des revendications 1 à 5, caractérisé par le fait que les bandes transporteuses (6) ou les glissières (20) avec les récipients récepteurs (1) poussés sont conduites vers un ou plusieurs disques distributeurs (9, 10) ou bandes transporteuses linéaires recevant les pièces façonnées (4) ou le long de ceux-ci.
